# EUROPÄISCHE PATENTSCHRIFT

(11) **EP 0 747 117 B1**
(45) Veröffentlichungstag und Bekanntmachung des Hinweises auf die Patenterteilung: **09.08.2000**
(21) Anmeldenummer: 96108205.4
(22) Anmeldetag: 23.05.1996
(51) Int. Cl.: B01J 19/32, C02F 3/10

(54) **Füllkörperblock und Verfahren zur Herstellung desselben**
Filler block and method of production
Bloc de remplissage et procédé pour sa fabrication

(30) Priorität: 07.06.1995 DE 19520351
(43) Veröffentlichungstag der Anmeldung: 11.12.1996
(73) Patentinhaber: Norddeutsche Seekabelwerke GmbH, 26954 Nordenham (DE)
(72) Erfinder: Basse, Hartwig, 26954 Nordenham (DE)
(74) Vertreter: Möller, Friedrich, Dipl.-Ing.

(56) Entgegenhaltungen:
- EP-A- 0 508 223
- DE-A- 4 320 469
- GWF WASSER ABWASSER, Bd. 127, Nr. 9, 1986, MUNCHEN DE, Seiten 421-428, XP002014199 S. SCHLEGEL: "Der Einsatz von getauchten Festbettkörpern beim Belebungsverfahren"

## Beschreibung

Die Erfindung betrifft einen Füllkörperblock nach dem Oberbegriff des Anspruchs 1 und 2 sowie ein Verfahren zur Herstellung eines Füllkörperblocks nach dem Oberbegriff des Anspruchs 6.

Die hier angesprochenen Füllkörperblöcke werden zur Bildung von Tropfkörpern, Tauchtropfkörpern oder getauchten Festbetten zur biologischen Behandlung von Abwässern oder sonstigen Fluiden (Flüssigkeiten oder Gasen) verwendet. Dazu sind die Füllkörperblöcke mit einer Biomasse, einem sogenannten biologischen Rasen, besiedelt.

Es ist bekannt (gwf-wasser/abwasser, Bd. 127 (1986), Nr. 9, s. 421-428), eine Vielzahl von nebeneinanderliegenden Rohrabschnitten mit netzartig strukturierter Mantelfläche zur Bildung von Füllkörperblöcken miteinander zu verbinden. Die Verbindung der Rohrabschnitte erfolgt mittels Spiegelschweißung, indem mindestens die Stirnflächen der Rohrabschnitte auf einer Seite des Füllkörperblocks erwärmt und druckbeaufschlagt werden. Dabei entstehen an den Stirnflächen der Rohrabschnitte Materialanhäufungen, die an den Kontaktstellen mit Stirnflächen benachbarter Rohrabschnitte verschmelzen und auf diese Weise Verbindungsstellen bilden.

Die bei den bekannten Füllkörperblöcken erfolgende Verschweißung der Stirnflächen der Rohrabschnitte führt dazu, daß die schweißnahtähnlichen Materialanhäufungen breiter sind als die Dicke der Mantelwandungen der Rohrabschnitte außerhalb der Bereiche der Materialanhäufungen, wodurch die freien, inneren Querschnitte der Rohrabschnitte und die Querschnitte von zwischen benachbarten Rohrabschnitten liegenden Freiräumen (sogenannten Zwickel) verringert werden. Die Folge ist eine Reduzierung der stirnseitigen Freiräume in den Rohrabschnitten und zwischen benachbarten Rohrabschnitten. Dadurch wird eine längsgerichtete Durchströmung der Füllkörperblöcke erschwert und der Fluiddurchsatz pro Zeiteinheit verringert. Das führt zu einer Verringerung der Wirksamkeit solcher bekannten Füllkörperblöcke.

Der Erfindung liegt die Aufgabe zugrunde, einen wirksamen Füllkörperblock und ein Verfahren zur einfachen Herstellung desselben zu schaffen.

Ein zur Lösung dieser Aufgabe dienender Füllkörperblock weist die Merkmale des Anspruchs 1 auf. Demnach sind die schweißnahtbildenden Materialanhäufungen an mindestens einer Stirnseite des Füllkörperblocks so ausgebildet, daß sie mindestens etwa bündig mit dem Innendurchmesser der Rohrabschnitte in ihren unverformten Bereichen außerhalb der Materialanhäufungen abschließen. Eine Reduzierung des Querschnitts der von den Mantelflächen der Rohrabschnitte eingeschlossenen Rohrinnenräume, wie sie bei den bekannten Füllkörperblöcken erfolgt, ist demnach bei dem erfindungsgemäßen Füllkörperblock nicht vorhanden.

Ein weiterer Füllkörper zur Lösung der der Erfindung zugrundeliegenden Aufgabe weist die Merkmale des Anspruchs 2 auf. Demnach entspricht der stirnseitige Querschnitt des Füllkörperblocks im Bereich der zur Schweißverbindung der Rohrabschnitte dienenden Materialanhäufungen etwa dem Querschnitt des Füllkörperblocks in den an die Materialanhäufungen anschließenden, unverschweißten Bereichen der Rohrabschnitte. Auch hierdurch wird sichergestellt, daß durch die zur Schweißverbindung benachbarter Rohrabschnitte dienenden Materialanhäufungen keine nennenswerte Verringerung der als Strömungswegen zu behandelnden Fluids dienenden Freiräume des Füllkörperblocks zustandekommt.

Vorzugsweise sind die Materialanhäufungen auch in den zwickelartigen Zwischenräumen zwischen benachbarten Rohrabschnitten bündig zu den äußeren Mantelflächen der Rohrabschnitte ausgebildet. Auf diese Weise wird durch die Schweißverbindungen der Rohrabschnitte bildenden Materialanhäufungen der Querschnitt der Füllkörperblöcke nicht oder zumindest nicht nennenswert verändert. Die zur Schweißverbindung der Rohrabschnitte dienenden Materialanhäufungen beeinträchtigen deshalb den Durchfluß des zu behandelnden Fluids durch die Füllkörperblöcke, und damit die Wirksamkeit derselben, nicht.

Ein Verfahren zur Lösung der der Erfindung zugrundeliegenden Aufgabe weist die Maßnahmen des Anspruchs 6 auf. Durch die Verringerung der Breite der schweißnahtähnlichen Materialanhäufungen werden die beim vorangegangenen Schweißen entstehenden Querschnittsverengungen an mindestens einer Stirnseite, vorzugsweise aber an beiden Stirnseiten, des Füllkörperblocks rückgängig gemacht. Das geschieht im noch warmen bzw. erwärmten Zustand der Materialanhäufungen durch plastische Verformung, wodurch ohne eine zusätzliche Erwärmung die noch nicht erstarrten Materialverformungen aus der Wärme der Verschweißung heraus umgeformt werden.

Vorzugsweise erfolgt eine Verringerung der Breite der Materialanhäufungen durch eine stirnseitig erfolgende Kalibrierung. Diese Kalibrierung führt zu einer Aufweitung des inneren Querschnitts der Rohrabschnitte bzw. der zwickelartigen Freiräume zwischen benachbarten Rohrabschnitten.

Weitere Unteransprüche betreffen bevorzugte Weiterbildungen des erfindungsgemäßen Füllkörperblocks und des Verfahrens zur Herstellung desselben.

Bevorzugte Ausführungsbeispiele der Erfindung werden nachfolgend anhand der Zeichnung näher erläutert. In dieser zeigen:
- Fig. 1: einen Füllkörperblock in perspektivischer und schematischer Darstellung,
- Fig. 2: einen vergrößert dargestellten Schnitt II-II durch einen Teil des Füllkörperblocks der Fig. 1, und
- Fig. 3: einen vergrößert dargestellten Schnitt III-III durch zwei Rohrabschnitte des Füllkörperblocks.

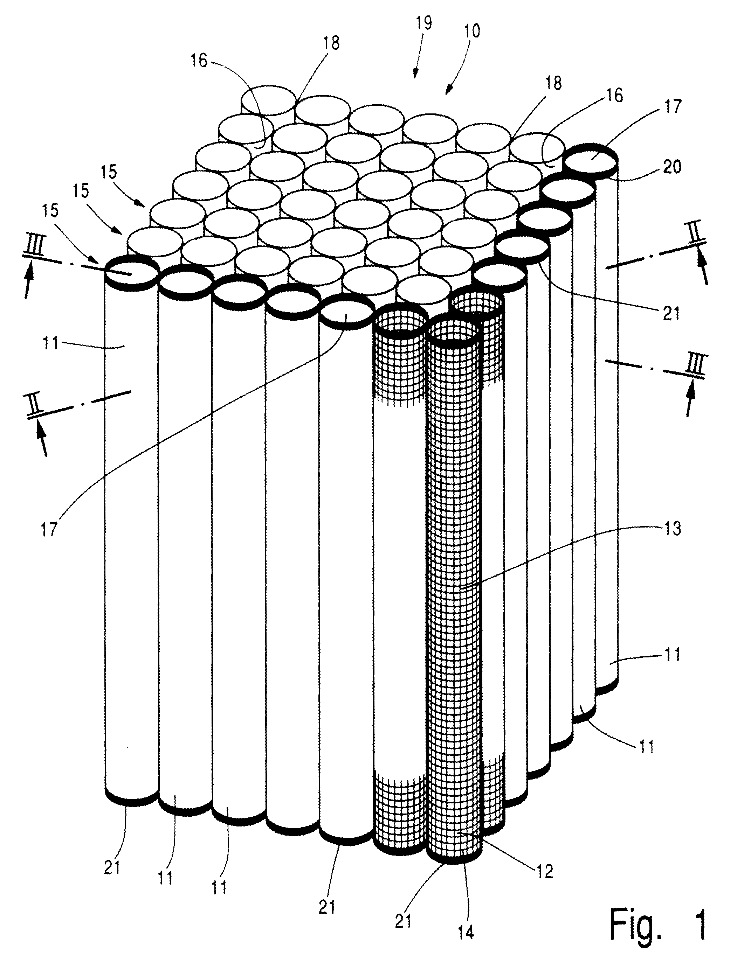

Ein Füllkörperblock 10, wie er in der Fig. 1 dargestellt ist, dient zur insbesondere biologischen Behandlung von Fluiden, und zwar vorzugsweise Abwässern. Ein oder auch mehrere mit biologischem Rasen besiedelte Füllkörperblöcke 10 werden als getauchtes Festbett buw. Tropfkörper feststehend in einem Flüssigkeitsbecken angeordnet, wobei das sich im Flüssigkeitsbecken befindliche Abwasser zur biologischen Behandlung durch den oder jeden Füllkörperblock 10 hindurchgeleitet wird. Die Füllkörperblöcke 10 können aber auch als sogenannte Tauchtropfkörper in einem Tauchtrommelreaktor angeordnet sein, der drehend antreibbar ganz oder teilweise in dem in einem Flüssigkeitsbecken sich befindlichen Abwasser eingetaucht ist, wobei durch den drehenden Antrieb des Tauchtrommelreaktors das im Flüssigkeitsbecken sich befindende Abwasser durch die Füllkörperblöcke 10 hindurchströmt.

Jeder Füllkörperblock 10 setzt sich zusammen aus einer Mehrzahl von Rohrabschnitten 11 aus Kunststoff. Im gezeigten Ausführungsbeispiel sind die Rohrabschnitte 11 zylindrisch ausgebildet und mit einer netzartig strukturierten Mantelfläche 12 versehen. Die in den Figuren dargestellten Rohrabschnitte 11 sind als Netzrohre ausgebildet. Die netzrohrartigen Rohrabschnitte 11 werden gebildet durch mit Abstand parallel zueinander verlaufende Längsstränge 13 und in Umfangsrichtung mit Abstand parallel zueinander verlaufende Umfangsstränge 14. An ihren Kreuzungspunkten sind die Längsstränge 13 mit den Umfangssträngen 14 einstückig verbunden.

Der Füllkörperblock 10 weist eine Vielzahl parallel zueinander verlaufender Rohrabschnitte 11 gleicher Länge auf. Wie die Fig. 1 erkennen läßt, sind die Rohrabschnitte 11 neben- und hintereinander angeordnet. Mehrere nebeneinanderliegende Rohrabschnitte 11 bilden eine Rohrabschnittsreihe 15. Mehrere dieser eine gleiche Anzahl von Rohrabschnitten 11 aufweisende Rohrabschnittsreihen 15 liegen hintereinander. Im gezeigten Ausführungsbeispiel besteht jede Rohrabschnittsreihe 15 aus sieben nebeneinanderliegenden Rohrabschnitten 11. Wiederum sieben Rohrabschnittsreihen 15 sind hintereinander angeordnet. Auf diese Weise verfügt der Füllkörperblock 10 über eine quadratische Grundfläche. Es ist aber denkbar, die Füllkörperblöcke 10 mit beliebig voneinander abweichenden Abmessungen zu bilden, indem die jeweilige Rohrabschnittsreihe 15 über eine größere oder kleinere Anzahl von Rohrabschnitten 11 verfügt, oder eine beliebige Anzahl von Rohrabschnittsreihen 15 hintereinander angeordnet ist.

Im gezeigten Ausführungsbeispiel fluchten die Längsmittelachsen der Rohrabschnitte 11 benachbarter Rohrabschnittsreihen 15 miteinander, so daß in quer zu den Rohrabschnittsreihen 15 verlaufenden Richtungen die Rohrabschnitte 11 wie in den Rohrabschnittsreihen 15 nebeneinander bzw. hintereinander liegen. Durch diese Relativanordnung der Rohrabschnitte 11 zueinander entsteht zwischen einer Gruppe von jeweils vier benachbarten Rohrabschnitten 11 ein Zwischenraum 16 mit einem Querschnitt der einem Karo ähnelt. Die Zwischenräume 16 zwischen jeweils vier Rohrabschnitten 11 verlaufen in Längsrichtung des von der jeweiligen Mantelfläche 12 jedes Rohrabschnitts 11 eingeschlossenen (zylindrischen) Rohrinnenraums 17. Die Längsmittelachsen der Rohrinnenräume 17 und der Zwischenräume 16 verlaufen demzufolge parallel zueinander.

Die Rohrabschnitte 11 des Füllkörperblocks 10 liegen unmittelbar aneinander an. Infolge der zylindrischen Ausbildung der Rohrabschnitte 11 berühren sich benachbarte Rohrabschnitte 11 mit Außenseiten ihrer Mantelflächen 11 längs einer parallel zur Längsmittelachse des jeweiligen Rohrabschnitts 11 verlaufenden Berührungslinie 18. Verbunden sind die Rohrabschnitte 11 miteinander an ihren gegenüberliegende Stirnflächen 19 des Füllkörperblocks 10 bildenden Stirnseiten 20. Es ist aber auch denkbar, die Rohrabschnitte 11 mit ihren nur an einer Stirnfläche 19 des Füllkörperblocks 10 liegenden Stirnseiten 20 zu verbinden. Die Verbindung der Stirnseiten 20 benachbarter Rohrabschnitte 11 erfolgt wie bei bekannten Füllkörperblöcken 10 durch Schweißung. Dazu werden die Stirnseiten 20 der aus Kunststoff gebildeten Rohrabschnitte 11 erwärmt und mit Druck beaufschlagt, wodurch in den Bereichen der Stirnseiten 20 der Rohrabschnitte 11 Materialanhäufungen 21 entstehen. Durch ein Zusammenfließen der Materialanhäufungen 21 in den Bereichen sich berührender, benachbarter Rohrabschnitte 11 kommt eine Verbindung der jeweiligen Rohrabschnitte 11 zustande.

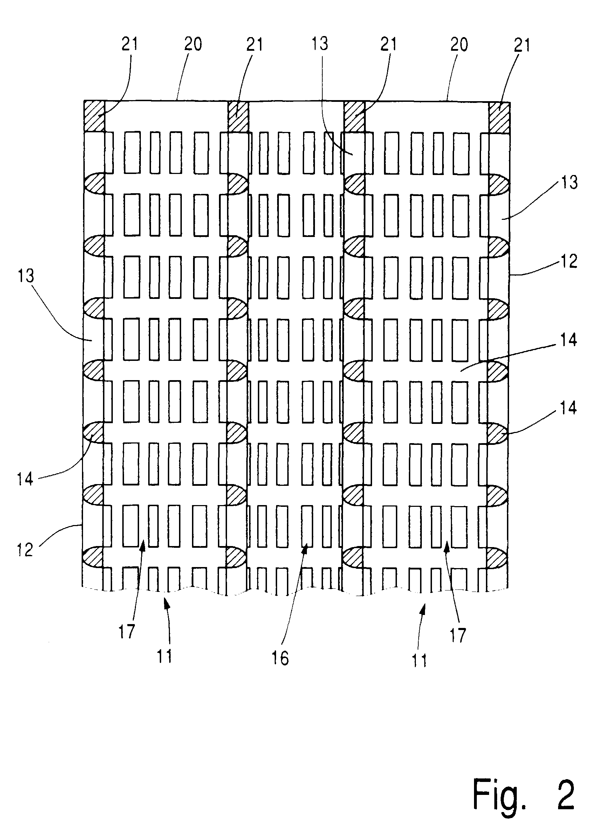

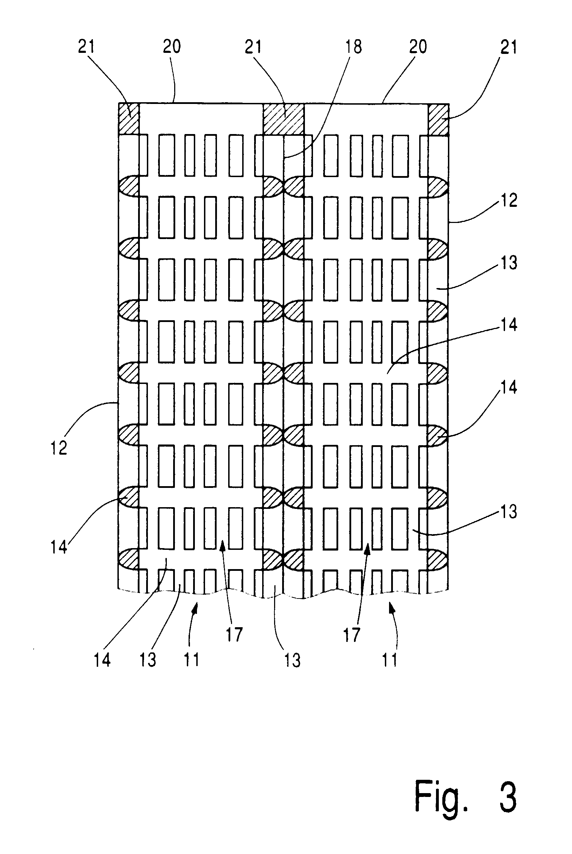

Wie die Fig. 2 und 3 zeigen, sind die Materialanhäufungen 21 in den Bereichen der Stirnseiten 20 der Rohrabschnitte 11 in besonderer Weise gestaltet. Die Materialanhäufungen 21 sind derart geformt insbesondere aufgeweitet, daß sie in ihrer Breite etwa der Wandstärke der Mantelfläche 12 der Rohrabschnitte 11 entsprechen. Auf diese Weise ist der Innendurchmesser jeder Materialanhäufung 21 etwa gleichgroß zum Innendurchmesser des entsprechenden Rohrabschnitts 11 außerhalb des Bereichs der Materialanhäufung 21. Auf diese Weise verfügen die Rohrabschnitte 11 über ihre gesamte Länge durchgehend über den gleichen oder nahezu gleichen Innendurchmesser. Es ist auch denkbar, daß in den Bereichen der Materialanhäufungen 21 der Innendurchmesser der Rohrabschnitte 11 größer ist als der Innendurchmesser der Rohrabschnitte 11 außerhalb der Materialanhäufungen 21. Es geht dann die Aufweitung der Materialanhäufungen 21 über den Innendurchmesser der Rohrabschnitte 11 zwischen den Materialanhäufungen 21 hinaus. Der Außendurchmesser jeder Materialanhäufung 21 entspricht dem äußeren Querschnitt des jeweiligen Rohrabschnitts 11 außerhalb des Bereichs der Materialanhäufung 21. Infolge der vorstehend beschriebenen Bemessung der Materialanhäufungen 21 entsprechen die Querschnitte der Zwischenräume 16 und der Rohrinnenräume 17 in den Bereichen der Materialanhäufungen 21 den Querschnitten der Zwischenräume 16 und der Rohrinnenräume 17 außerhalb der Bereiche der Materialanhäufungen 21. Mit anderen Worten sind also die Materialanhäufungen 21 so ausgebildet, daß sie die Querschnitte der Rohrinnenräume 17 und der Zwischenräume 16 nicht oder nicht nennenswert einschnüren. Die Fig. 3 zeigt, daß dort, wo sich die Materialanhäufungen 21 benachbarter Rohrabschnitte 11 berühren, nämlich auf der Berührungslinie 18, die ringförmigen Materialanhäufungen an den Stirnseiten 20 der Rohrabschnitte 11 zusammenhängen, indem das Kunststoffmaterial der Materialanhäufung 21 ineinandergeflossen ist und dadurch an den Stirnflächen 19 der Füllkörperblöcke 20 eine massive Verbindung der Materialanhäufungen 21 erfolgt, durch die die Rohrabschnitte 11 zur Bildung des Füllkörperblocks 10 zusammengehalten werden.

Das Verfahren zur Herstellung eines Füllkörperblocks 10 läuft wie folgt ab:

Zunächst wird eine der gewünschten Abmessung des Füllkörperblocks 10 entsprechende Anzahl gleich langer Rohrabschnitte 11 derart gruppiert, daß sie sich in der in Fig. 1 gezeigten Relativanordnung befinden, in der die Rohrabschnitte 11 mit ihren äußeren Mantelflächen 12 an den senkrecht zu den Stirnflächen 19 der Füllkörperblöcke 10 verlaufenden Berührungslinien 18 aneinanderliegen. In dieser Position werden die noch unverbundenen Rohrabschnitte 11 durch entsprechende Einrichtungen vorläufig arretiert.

Nachdem die Rohrabschnitte 11 gemäß der Darstellung in der Fig. 1 gruppiert und arretiert sind, wird eine beheizbare, ebene Schweißplatte zur Anlage mit der Stirnfläche 19 des Füllkörperblocks 10 gebracht, wobei die Heizplatte derart bemessen ist, daß sie die Stirnseiten 20 aller Rohrabschnitte 10 überdeckt. Durch anschließendes oder permanentes Beheizen der Heizplatte wird das Kunststoffmaterial in den Bereichen der Stirnseiten 20 der Rohrabschnitte 11 so weit erwärmt, daß es einen teigigen bzw. fließigen Zustand aufweist. Durch Anwendung von Druck wird das erwärmte Material in den Bereichen der Stirnseiten 20 der Rohrabschnitte 11 plastisch verformt, und zwar zusammengedrückt, wodurch die netzförmige Struktur der Rohrabschnitte 11 in den Bereichen der Stirnseiten 20 beseitigt wird und Materialanhäufungen 21 entstehen. Insoweit entspricht die Vorgehensweise der bekannten Spiegelschweißung, bei der die ringförmigen Materialanhäufungen 21 benachbarter Rohrabschnitte 11 an ihren Berührungspunkten zusammenfließen zur Verbindung der Rohrabschnitte 11, aber auch eine Einschnürung der Querschnitte der Zwischenräume 16 und der Rohrinnenräume 17 entsteht. Die Breite der Materialanhäufungen 21 ist also zunächst auch größer als die Wandstärke der Mantelfläche 12 des jeweiligen Rohrabschnitts 11.

Erfindungsgemäß wird unmittelbar nach der Spiegelschweißung die daraus resultierende Querschnittsverengung der Zwischenräume 16 und der Rohrinnenräume 17 im Bereich der Materialanhäufungen 21 rückgängig gemacht. Dies geschieht aus der Wärme der Schweißung heraus, nämlich zu einem Zeitpunkt, zu dem das Kunststoffmaterial der Materialanhäufungen 21 sich in einem noch angeschmolzenen bzw. teigigen Zustand befindet durch eine plastische Verformung. Diese Verformung ähnelt einer Kalibrierung, indem die Materialanhäufung 21 auf eine Breite gebracht wird, die etwa der Wanddicke der Mantelflächen 12 der Rohrabschnitte 11 entspricht.

Zur Verformung der Materialanhäufung 21 dient eine Formplatte mit Vorsprüngen. Die Vorsprünge sind korrespondierend zu den Querschnitten der Zwischenräume 16 und der Rohrinnenräume 17 außerhalb der Materialanhäufung 21 ausgebildet. Die Relativanordnung der Vorsprünge entspricht den Positionen der Querschnitte der Rohrinnenräume 17 und der Zwischenräume 16 des Füllkörperblocks 10. Da die Verformung der Materialanhäufung 21 unter Verwendung der Restwärme aus dem Schweißvorgang erfolgt, ist es nicht erforderlich, die Vorsprünge bzw. die Formplatte zu beheizen. Gleichwohl kann für bestimmte Anwendungsfälle eine Beheizung der Vorsprünge und/oder der Formplatte erfolgen.

Die Verformung der Materialanhäufung 21 erfolgt durch ein Einschieben der Vorsprünge von der jeweiligen Stirnfläche 19 des Füllkörperblocks 10 her in die Zwischenräume 16 und die Rohrinnenräume 17. Durch die korrespondierende Ausbildung der Vorsprünge zu den Querschnitten der Zwischenräume 16 und der Rohrinnenräume 17 kommt es dabei zu einer Verdrängung des noch plastisch verformbaren Materials der Materialanhäufungen 21. Zur Vermeidung eines Hineinschiebens des Materials der Materialanhäufungen 21 in die Zwischenräume 16 und die Rohrinnenräume 17 sind die Vorsprünge leicht konisch ausgebildet. Ihr Querschnitt nimmt mit zunehmender Einschubtiefe in die Zwischenräume 16 bzw. Rohrinnenräume 17 zu, und zwar bis zum Erreichen des mit den Zwischenräumen 16 und den Rohrinnenräumen 17 korrespondierenden Querschnitts. Dabei kommt es zu einem allmählichen, kontinuierlichen Aufweiten der ringförmigen Materialanhäufung 21 jedes Rohrabschnitts 11, wobei das überflüssige Material entgegen der Bewegungsrichtung der Vorsprünge hochfließt, und zwar derart, daß mit der Abnahme der Breite der Materialanhäufung sich die Länge bzw. Höhe derselben um das Maß des verdrängten Materials erhöht.

Nach der erfolgten Verformung der Materialanhäufungen 21 wird die Formplatte von der entsprechenden Stirnfläche 19 des Füllkörperblocks 10 wieder abgehoben, also die Vorsprünge aus den Stirnseiten 20 der Rohrabschnitte 11 herausgezogen. Die Materialanhäufungen 21 verfügen danach über ringförmige Querschnitte, die etwa dem Querschnitt des jeweiligen Rohrabschnitts 11 außerhalb der Materialanhäufungen 21 entspricht, wodurch die beim Spiegelschweißen entstandenen Einschnürungen der Querschnitte der Zwischenräume 16 und der Rohrinnenräume 17 ganz oder zumindest im wesentlichen rückgängig gemacht worden sind (Fig. 2 und 3).
Wenn - wie im gezeigten Ausführungsbeispiel - gegenüberliegende Stirnflächen 19 jedes Füllkörperblocks 10 mit durch Materialanhäufungen 21 verschweißten Stirnseiten 20 der Rohrabschnitte 11 versehen sind, erfolgt die Spiegelschweißung und die anschließende Verformung bzw. Kalibrierung der dabei entstandenen Materialanhäufungen 21 auf beiden Stirnseiten 19 des Füllkörperblocks 10 gleichzeitig oder nacheinander. Es ist auch denkbar, nur an einer Stirnfläche 19 des Füllkörperblocks die Rohrabschnitte 11 durch schweißnahtähnliche Materialanhäufungen 21 miteinander zu verbinden, so daß dann nur an dieser Stirnfläche 19 eine Kalibrierung der Materialanhäufung 21 erforderlich ist. Es bleiben dann die Stirnseiten 20 der Rohrabschnitte 11 auf der gegenüberliegenden Stirnfläche 19 des Füllkörperblocks 10 unverbunden.

## Patentansprüche

1. Füllkörperblock zur Bildung von Festbetten, Tropfkörpern oder Tauchtropfkörpern zur biologischen Behandlung von Fluiden, insbesondere Abwässern, mit einer Mehrzahl von eine größtenteils netzartig strukturierte Mantelfläche aufweisenden Rohrabschnitten aus Kunststoff, die an ihren Stirnseiten durch schweißnahtähnliche, umlaufende Materialanhäufungen miteinander verbunden sind, **dadurch gekennzeichnet,** daß die Innenseiten der umlaufenden Materialanhäufungen (21) an den Stirnseiten (20) der Rohrabschnitte (11) zum Innendurchmesser der netzartigen Bereiche der Rohrabschnitte (11) etwa bündig ausgebildet sind.

2. Füllkörperblock zur Bildung von Festbetten, Tropfkörpern oder Tauchtropfkörpern zur biologischen Behandlung von Fluiden, insbesondere Abwässern, mit einer Mehrzahl von eine größenteils netzartig strukturierte Mantelfläche aufweisenden Rohrabschnitten aus Kunststoff, die an ihren Stirnseiten durch schweißnahtähnliche, umlaufende Materialanhäufungen miteinander verbunden sind, **dadurch gekennzeichnet,** daß die umlaufenden Materialanhäufungen (21) an mindestens einer Stirnseite (20) der Rohrabschnitte (11) über einen ringförmigen Querschnitt verfügen, der etwa dem ringförmigen Querschnitt des netzartigen Rohrabschnitts (11) außerhalb der Materialanhäufungen (21) entspricht.

3. Füllkörperblock nach Anspruch 1 oder 2, **dadurch gekenn zeichnet,** daß in den Bereichen von Zwischenräumen (16) zwischen benachbarten, vorzugsweise kreisrunden, Rohrabschnitten (11) die Materialanhäufungen (21) etwa dem Querschnitt der vom Außenumfang der netzartigen Bereiche der Rohrabschnitte (11) begrenzten Zwischenräume (16) entsprechen.

4. Füllkörperblock nach Anspruch 1 oder 3, **dadurch gekennzeichnet,** daß die stirnseitigen Materialanhäufungen (21) der einzelnen Rohrabschnitte (11) in den Anlagebereichen zu Materialanhäufungen (21) der benachbarten Rohrabschnitte (11) miteinander in Verbindung stehen, insbesondere einstückig.

5. Füllkörperblock nach Anspruch 1 oder 3, **dadurch gekennzeichnet,** daß die Breite der Materialanhäufungen (21) etwa so groß ist, wie die Wandstärke (Dicke) der Mantelflächen (12) der Rohrabschnitte (11) im netzartigen Bereich der Rohrabschnitte (11).

6. Verfahren zur Herstellung von Füllkörperblöcken mit mehreren größtenteils netzartig strukturierten Rohrabschnitten aus Kunststoff zur biologischen Behandlung von vorzugsweise Abwässern, wobei die Rohrabschnitte stirnseitig miteinander verbunden sind durch Erwärmung mindestens einer Stirnseite jedes Rohrabschnitts und Druckbeaufschlagung der erwärmten Stirnseite zur Bildung einer schweißnahtähnlichen, umlaufenden Materialanhäufung an mindestens einer Stirnseite der Rohrabschnitte, **dadurch gekennzeichnet,** daß die umlaufenden Materialanhäufungen (21) im noch warmen Zustand durch plastische Verformung von der Innenseite der Rohrabschnitte (11) her derart aufgeweitet werden, daß die Rohrabschnitte (11) sowohl im Bereich der Materialanhäufungen (21) als auch im angrenzenden netzartig strukturierten Bereich über etwa gleiche Durchmesser verfügen.

7. Verfahren nach Anspruch 6, **dadurch gekennzeichnet,** daß die Aufweitung der Materialanhäufungen (21) allmählich und/oder kontinuierlich erfolgt.

8. Verfahren nach Anspruch 6, **dadurch gekennzeichnet,** daß die Aufweitung der Materialanhäufungen (21) durch plastische Verformung, insbesondere Kalibrieren, bei noch fließfähigem bzw. teigigem Zustand des Materials der Materialanhäufungen (21) erfolgt.

9. Verfahren nach Anspruch 6, **dadurch gekennzeichnet,** daß eine Aufweitung der von den Materialanhäufungen (21) umschlossenen Flächen, insbesondere Querschnittsflächen der Rohrinnenräume (17) und/oder der Zwischenräume (16) zwischen benachbarten Rohrabschnitten (11), erfolgt.

10. Verfahren nach Anspruch 6, **dadurch gekennzeichnet,** daß die Verformung der Materialanhäufungen (21) mit mindestens einem Formwerkzeug vorgenommen wird.

11. Verfahren nach Anspruch 10, **dadurch gekennzeichnet,** daß das Formwerkzeug Vorsprünge aufweist, die von der jeweiligen Stirnfläche (19) des Füllkörperblocks (10) her in die Rohrinnenräume (17) der Rohrabschnitte (11) und/oder Zwischenräume (16) zwischen benachbarten Rohrabschnitten (11) eingefahren werden.

12. Verfahren nach Anspruch 11, **dadurch gekennzeichnet,** daß die Vorsprünge des oder jedes Formwerkzeugs unmittelbar nach der Herstellung der Materialanhäufungen (21) in die Rohrinnenräume (17) und/oder Zwischenräume (16) eingefahren werden.

## Claims

1. Filler block for forming percolating filters or rotating-disc filters for the biological treatment of fluids, in particular waste waters, comprising a plurality of tube sections which are made from plastic, have an outside surface which is mostly of mesh-like structure and, at their end sides, are joined together by material accumulations which are similar to weld seams and run all the way around, characterized in that the inner sides of the all-round material accumulations (21) at the end sides (20) of the tube sections (11) are formed approximately flush with the internal diameter of the mesh-like regions of the tube sections (11) .

2. Filler block for forming percolating filters or rotating-disc filters for the biological treatment of fluids, in particular waste waters, comprising a plurality of tube sections which are made from plastic, have an outside surface which is mostly of mesh-like structure and, at their end sides, are joined together by material accumulations which are similar to weld seams and run all the way around, characterized in that the all-round material accumulations (21) have an annular cross section on at least one end side (20) of the tube sections (11), the said cross section approximately corresponding to the annular cross section of the mesh-like tube section (11) outside the material accumulations (21).

3. Filler block according to Claim 1 or 2, characterized in that in the regions of spaces (16) between adjacent, preferably circular, tube sections (11), the material accumulations (21) approximately correspond to the cross section of the spaces (16) which are delimited by the outer circumference of the mesh-like regions of the tube sections (11).

4. Filler block according to Claim 1 or 3, characterized in that the end-side material accumulations (21) of the individual tube sections (11), in the areas where they bear against material accumulations (21) of the adjacent tube sections (11), are connected to one another, in particular integrally.

5. Filler block according to Claim 1 or 3, characterized in that the width of the material accumulations (21) is approximately equal to the wall thickness of the outer surfaces (12) of the tube sections (11) in the mesh-like region of the tube sections (11).

6. Method for producing filler blocks with a plurality of tube sections which are made from plastic and are mostly of mesh-like structure for biological treatment of, preferably, waste waters, the tube sections being joined together at the end sides by heating of at least one end side of each tube section and applying pressure to the heated end side, so as to form a material accumulation, which is similar to a weld seam and runs all the way around, on at least one end side of the tube sections, characterized in that the all-round material accumulations (21), while they are still hot, are widened by plastic deformation from the inner side of the tube sections (11), in such a manner that the tube sections (11) have approximately the same diameter both in the region of the material accumulations (21) and in the adjoining region which has a mesh-like structure.

7. Method according to Claim 6, characterized in that the material accumulations (21) are widened gradually and/or continuously.

8. Method according to Claim 6, characterized in that the material accumulations (21) are widened by plastic deformation, in particular sizing, while the material of the material accumulations (21) is still in the flowable or pasty state.

9. Method according to Claim 6, characterized in that the areas enclosed by the material accumulations (21), in particular cross-sectional areas of the tube interiors (17) and/or the spaces (16) between adjacent tube sections (11), are widened.

10. Method according to Claim 6, characterized in that the material accumulations (21) are deformed by at least one forming tool.

11. Method according to Claim 10, characterized in that the forming tool has projections which are introduced from the corresponding end face (19) of the filler block (10) into the tube interiors (17) of the tube sections (11) and/or spaces (16) between adjacent tube sections (11).

12. Method according to Claim 11, characterized in that the projections of the or each forming tool are introduced into the tube interiors (17) and/or spaces (16) immediately after the material accumulations (21) have been produced.

## Revendications

1. Bloc de remplissage pour la formation de lits fixes, de lits percolateurs ou de lits percolateurs immergés pour le traitement biologique de fluides, en particulier d'eaux usées, comprenant une pluralité de sections de tuyau en matière synthétique présentant une surface d'enveloppe en grande partie à structure réticulée qui sont reliées les unes aux autres sur leurs côtés frontaux par des amas circulaires de matière semblables à des soudures, caractérisé en ce que les côtés intérieurs des amas (21) circulaires de matière sur les côtés frontaux (20) des sections (11) de tuyau sont conformés de manière sensiblement affleurante au diamètre intérieur des zones réticulées des sections (11) de tuyau.

2. Bloc de remplissage pour la formation de lits fixes, de lits percolateurs ou de lits percolateurs immergés pour le traitement biologique de fluides, en particulier d'eaux usées, comprenant une pluralité de sections de tuyau en matière synthétique présentant une surface d'enveloppe en grande partie à structure réticulée qui sont reliées les unes aux autres sur leurs côtés frontaux par des amas circulaires de matière semblables à des soudures, caractérisé en ce que les amas (21) circulaires de matière ont sur au moins un côté frontal (20) des sections (11) de tuyau une section transversale annulaire qui correspond approximativement à la section transversale annulaire de la section (11) de tuyau réticulée en dehors des amas (21) de matière.

3. Bloc de remplissage selon la revendication 1 ou 2, caractérisé en ce que dans les zones des espaces intermédiaires (16) entre des sections (11) de tuyau voisines, de préférence circulaires, les amas (21) de matière correspondent approximativement à la section transversale des espaces intermédiaires (16) limités par la circonférence extérieure des zones réticulées des sections (11) de tuyau.

4. Bloc de remplissage selon la revendication 1 ou 3, caractérisé en ce que les amas (21) de matière sur les côtés frontaux des différentes sections (11) de tuyau sont connectés, dans les zones en contact, aux amas (21) de matière des sections (11) de tuyau voisines, en particulier en une pièce.

5. Bloc de remplissage selon la revendication 1 ou 3, caractérisé en ce que la largeur des amas (21) de matière est approximativement aussi grande que l'épaisseur de la surface d'enveloppe (12) des sections (11) de tuyau dans la zone réticulée des sections (11) de tuyau.

6. Procédé de fabrication de blocs de remplissage comprenant plusieurs sections de tuyau en matière synthétique à structure réticulée pour le traitement biologique de préférence d'eaux usées, les sections de tuyau étant reliées les unes aux autres du côté frontal par le chauffage au moins d'un côté frontal de chaque section de tuyau et l'emboutissage par pression du côté frontal chauffé pour former un amas de matière circulaire semblable à une soudure sur au moins un côté frontal des sections de tuyau, caractérisé en ce que les amas (21) circulaires de matière encore à l'état chaud sont élargis par déformation plastique de l'intérieur des sections (11) de tuyau de telle manière que les sections (11) de tuyau ont approximativement le même diamètre tant dans la zone des amas (21) de matière que dans la zone adjacente à structure réticulée.

7. Procédé selon la revendication 6, caractérisé en ce que l'élargissement des amas (21) de matière se fait progressivement et / ou en continu.

8. Procédé selon la revendication 6, caractérisé en ce que l'élargissement des amas (21) de matière se fait par déformation plastique, en particulier calibrage, quand la matière des amas (21) de matière est encore à l'état coulant ou pâteux.

9. Procédé selon la revendication 6, caractérisé en ce qu'un élargissement des surfaces entourées par les amas (21) de matière, en particulier les surfaces de section transversale de l'intérieur (17) des tuyaux et/ou des espaces intermédiaires (16) entre les sections (11) de tuyau voisines a lieu.

10. Procédé selon la revendication 6, caractérisé en ce que la déformation des amas (21) de matière est entreprise avec au moins un outil de formage.

11. Procédé selon la revendication 10, caractérisé en ce que l'outil de formage présente des saillies qui sont introduites à partir de la face frontale (19) concernée du bloc de remplissage (10) à l'intérieur (17) des sections (11) de tuyau et/ou dans les espaces intermédiaires (16) entre des sections (11) de tuyau voisines.

12. Procédé selon la revendication 11, caractérisé en ce que les saillies de l'outil de formage ou de chaque outil de formage sont introduit directement après la fabrication des amas (21) de matière à l'intérieur (17) du tuyau et / ou dans les espaces intermédiaires (16).
